# EUROPEAN PATENT APPLICATION

(11) **EP 1 228 917 A1**
(43) Date of publication of application: **07.08.2002**
(21) Application number: 01300912.1
(22) Date of filing: 01.02.2001
(51) Int. Cl.: B60K 37/06

(54) **A control arrangement**

(71) Applicant: Pi Technology, Milton, Cambridge CB4 6WZ (GB)
(72) Inventor: Robinson, Thomas Alec Jeffry Maxwell, Cottenham, Cambridge CB4 8XW (GB); Styles, Julian Michael, Sawston, Cambridgeshire CB2 4EH (GB); Thorp, Ian Richard, Chesterton, Cambridge CB4 1PY (GB)
(74) Representative: Davies, Owen Robert Treharne

(57) **Abstract**

A control arrangement is disclosed in which the approach of a hand 22 to a control element 12, 14 is detected by proximity and/or touch sensors 16, 18. The approach of the hand to within a predetermined range of the control elements 12, 14 brings a head-up-display (HUD) 40 out of hibernation and results in an image 42 of the control element 12, 14 being projected substantially into a line of sight of a user. The user can use the projected image 42 to guide his hand to a particular control element 12 and to obtain feedback of changes made using that control element 12. A user can therefore operate controls 12, 14 without looking directly at them.

## Description

This invention relates to control arrangements and in particular to a control arrangement suitable for a vehicle.

It is known to provide a vehicle with a user operated control for operating one or more subsystems of the vehicle, such as for example a manually rotated knob for adjusting the output temperature of a heating and ventilating system. The increasing number of features being included in modern vehicles has led to a proliferation of user operated controls and to subsequent attempts to reduce the burden placed on a user for their effective and safe operation.

Prior art systems which attempt to alleviate the burden on a user can be seen by way of example in US5539429, US5821935 and US5877751. A problem with many such prior art systems is that, in common with many very simple systems, a user still has to look at a control panel to see his options and to guide his hand to an associated control element. This might prove inconvenient, in particular if the user is driving the vehicle and has to take his eyes off the road in order to find the control element in question.

It is an object of this invention to provide an improved control arrangement.

According to the invention, there is provided a control arrangement for a vehicle, comprising at least one user operated control element for controlling a vehicle subsystem, a detector which detects the range of an object to a said control element and a feedback element which is operatively connected to said detector, characterised in that, when an object is within a predetermined range of said control element, said feedback element provides to a user, in an area remote from said control element, feedback relating to the control of said subsystem, whereby said subsystem is user controllable without the need to look substantially directly towards said control element.

Said feedback may become active as a said object is brought within said predetermined range of said control element. Said feedback may move out of an active state when a said object is moved out of said predetermined range. Said feedback may hibernate during a period of time when there is no object within said predetermined range of any said control element.

Said feedback element may provide different feedback depending on the range of a said object to at least one said control element.

Said detector may comprise a proximity detector portion and a touch detector portion and said feedback element may provide different feedback depending on whether said range is an approach to or touching of a said control element.

Said control arrangement may comprise a plurality of said control elements and, if a said object is within said predetermined range of a plurality of said control elements, said feedback element may provide feedback in accordance with a priority ranking of said plurality of control elements. Said priority ranking may be based on the substantially instantaneous proximity of said object to one or more of said plurality of control elements.

Said feedback may comprise a visual message which is displayed substantially within a portion of a user's line of sight. Said feedback element may comprise a head-up-display. Said feedback may comprise a visual message which is projected towards at least a portion of a window or towards a head-up-display combiner of said vehicle.

At least a portion of said feedback may be user detectable using at least one of the senses of hearing and touch.

Said feedback may provide user perceptible feedback of changes made to the state of at least one of a said control element and a said subsystem associated with said control element.

Said feedback element may comprise a steering wheel including an optical display, said optical display being adapted to provide to a user said feedback.

The invention also provides a method of controlling a subsystem of a vehicle, the method including:
a) detecting the range of an object to at least one user operated control element;
b) providing to a user and in an area remote from said control element, when an object is within a predetermined range of said control element, feedback relating to the control of said subsystem, whereby said subsystem is user controllable without the need to look substantially directly towards said control element.

The method may include activating said feedback as a said object is brought within said predetermined range of said control element. The method may include moving said feedback out of an active state when a said object is moved out of said predetermined range. The method may include hibernating said feedback during a period of time when there is no object within said predetermined range of any said control element.

The method may include providing different feedback depending on the range of a said object to at least one said control element.

The method may include providing different feedback depending on whether said range is an approach to or touching of a said control element.

The method may include providing said feedback in accordance with a priority ranking of said plurality of control elements.

The method may include providing said feedback in the form of a visual message which is displayed substantially within a portion of a user's line of sight. The method may include projecting said visual message towards at least a portion of a window or towards a head-up-display combiner of said vehicle.

The method may include providing said feedback using an optical display which is included in a steering wheel.

The invention will now be described by way of example only and with reference to the accompanying drawings, in which:

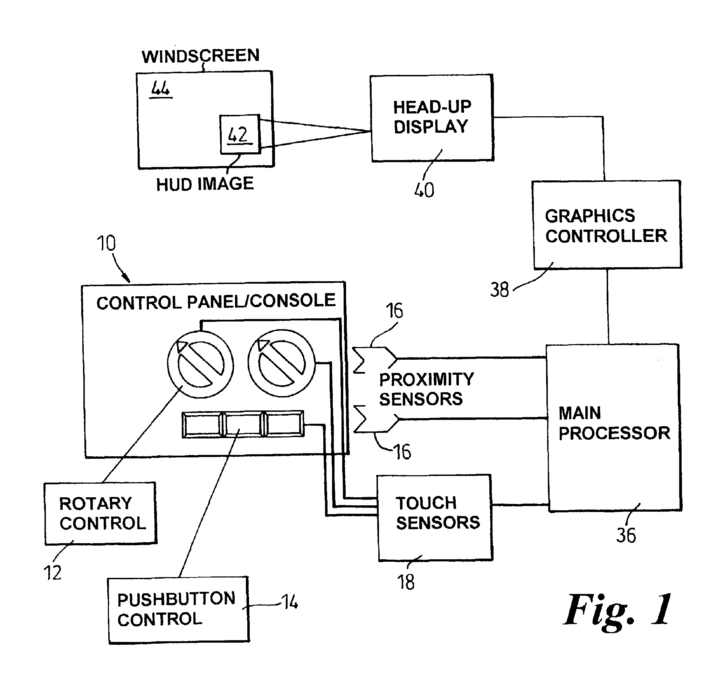

Figure 1 is a schematic diagram of a control arrangement according to one embodiment of the invention;
Figures 2a to 2e are schematic diagrams of a portion of the control arrangement of Figure 1 in use;
Figures 3 to 6 are schematic diagrams of sensing arrangements of the control arrangement of Figure 1; and
Figures 7 and 8 are further embodiments of the invention.

Referring to the figures, a control arrangement suitable for a vehicle comprises a control panel and console unit 10, which includes a plurality of user operated control elements in the form of rotary controls 12 and push buttons 14. The control elements 12, 14 are used to control the operation of at least one vehicle subsystem, such as for example a heating and ventilating unit.

The control elements 12, 14 are each associated with a detector arrangement in the form of proximity sensors 16 and touch sensors 18. The detector arrangement 16, 18 detects the range of objects 22 to the control elements 12, 14 and provides signals to a main processor 36 which indicate what that range is, i.e. approaching through a predefined approach zone AZ, presence within the approach zone AZ and therefore proximate to the control elements 12, 14 or actually touching one of them 12, 14.

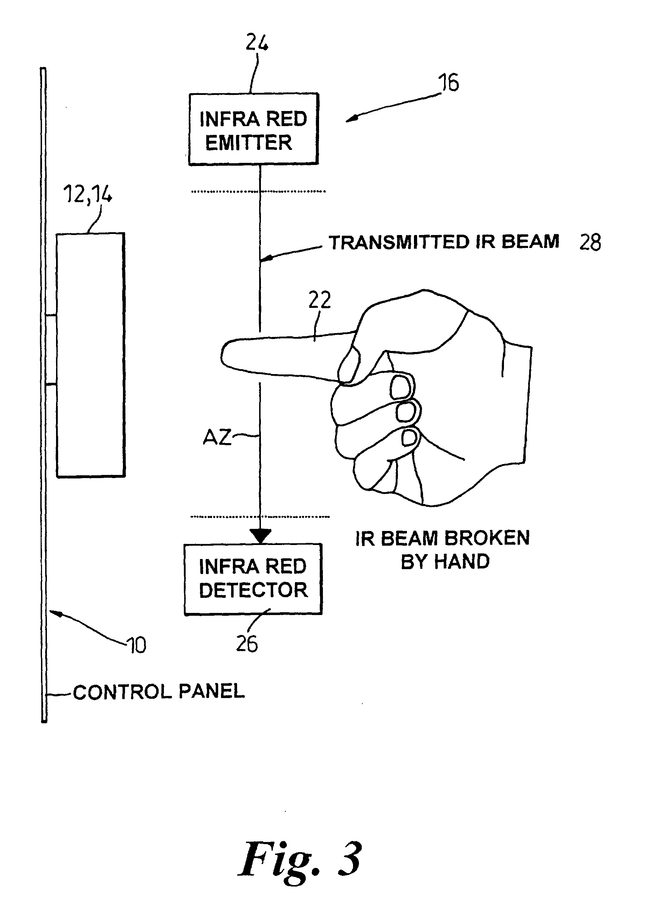

The proximity sensors 16 comprise, in one variation of this control arrangement, a transmissive infrared proximity detector including a two dimensional array of at least one infrared emitter 24 and detector 26 pair, which are positioned across a portion of the console 10. The emitter/detector pair 24, 26 transmit an infrared beam 28 between each other and detect when that beam 28 is broken by an object 22 approaching the console. One such embodiment is shown with particular reference to Figure 3.

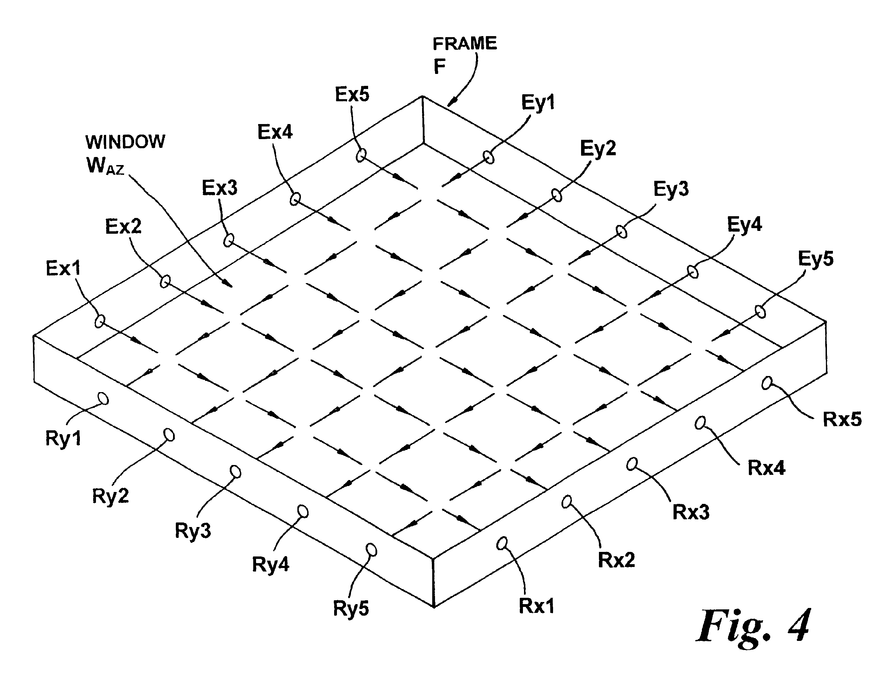

In a variation of this embodiment, shown with reference to Figure 4, a plurality of infrared emitter-receiver pairs Ex1-5, Rx 1-5, Ey1-5, Ry1-5 are spaced around a frame F and take the role of proximity sensing so as to form a window approach zone W_{AZ} in front of the control elements 12, 14, through which an object 22 must pass if it is to reach the control elements 12, 14.

In this manner, an X-Y co-ordinate system is developed from the signals of the proximity sensors Ex1-5, Rx 1-5, Ey1-5, Ry1-5 and the area of the window approach zone W_{AZ} is mapped. The point in that window approach zone W_{AZ} through which the object 22 has passed is derived from this co-ordinate system. From this information, the main processor 36 determines towards and between which of the control elements 12, 14 the object 22 is likely to be heading or moving and can provide feedback to a user of the position of his hand 22 relative to the control elements 12, 14 under approach.

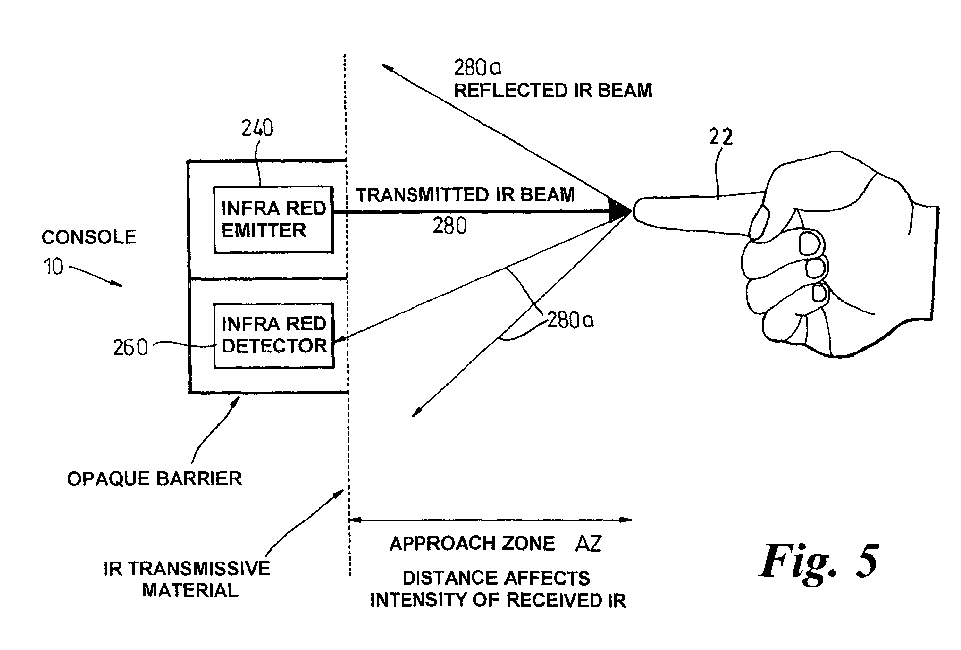

An alternative or additional embodiment of proximity sensing comprises a reflective infrared proximity sensing arrangement including at least one infrared emitter 240 and detector 260, mounted on the console 10, within an opaque barrier, in the region of the control elements 12, 14 and substantially side by side behind an infrared transmissive material. Such an arrangement is shown with particular reference to Figure 5 and operates by transmitting an infrared beam 280 outwardly from the console 10, which beam 280 is reflected backwards 280a by an object 22 which approaches the console 10.

In this arrangement, it is considered advantageous to operate the emitter 240 in a pulsed mode, so as to allow for lower power operation combined with a large sensing range and rejection of ambient radiation. The infrared emitter/detector arrangement 240, 260 of this embodiment may be selected from one or both of narrow and wide angle devices. That allows the control arrangement to provide a choice between, or combination of, detection of general proximity of an object 22 to the general area of the console 10, to specific regions of it, an approach zone AZ or for touch sensing. The level of reflected radiation 280a is used to determine the actual distance of the object 22 from the control element 12, 14 under approach.

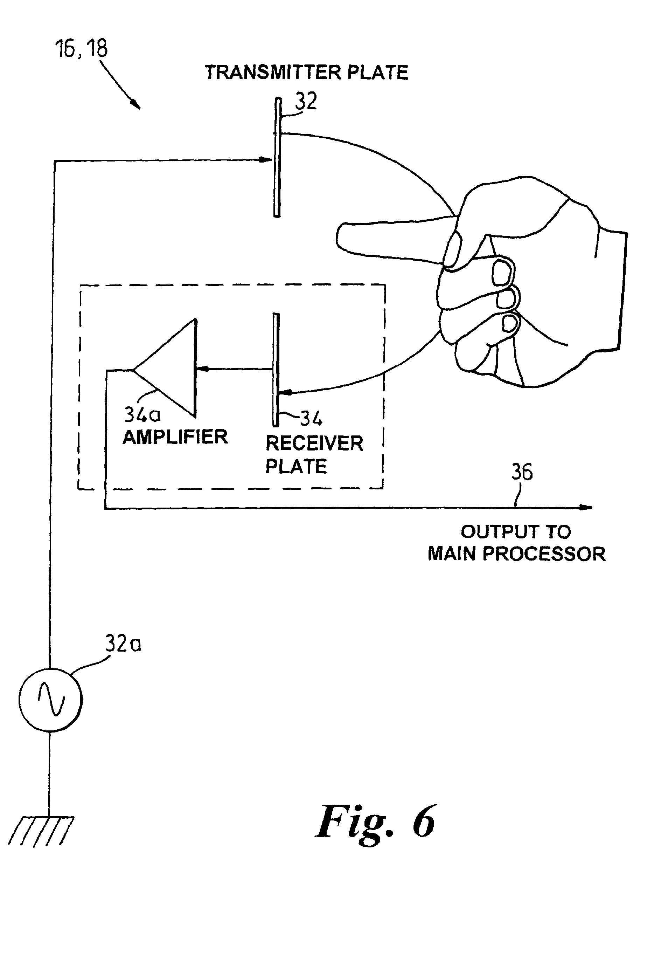

A further embodiment of a sensing arrangement is shown with particular reference to Figure 6 and comprises a capacitive proximity sensing arrangement which includes a transmitter plate 32 fed by a power supply 32a, a receiver plate 34 and an amplifier 34a. The approach of an object 22 affects the degree of coupling of the electric field between the transmitter plate 32 and the receiver plate 34. The detection circuit, which may for example be embedded in the amplifier 34a, measures the current flowing from the receiver plate 34 and is preferably adapted to reject interference such as might be caused by ambient noise and similar effects. This arrangement can also be adapted to detect touch by, for example, embedding one or both of the plates 32, 34 in one of the control elements 12, 14 and thereby providing a suitable touch sensor arrangement 18.

The outputs from the detector arrangement 16, 18 are fed into a main processor 36, where the range of the object from the control elements 12, 14 is determined. The main processor 36 provides the range information to a graphics controller 38, which controls the operation of a feedback element in the form of a head-up-display (HUD) 40.

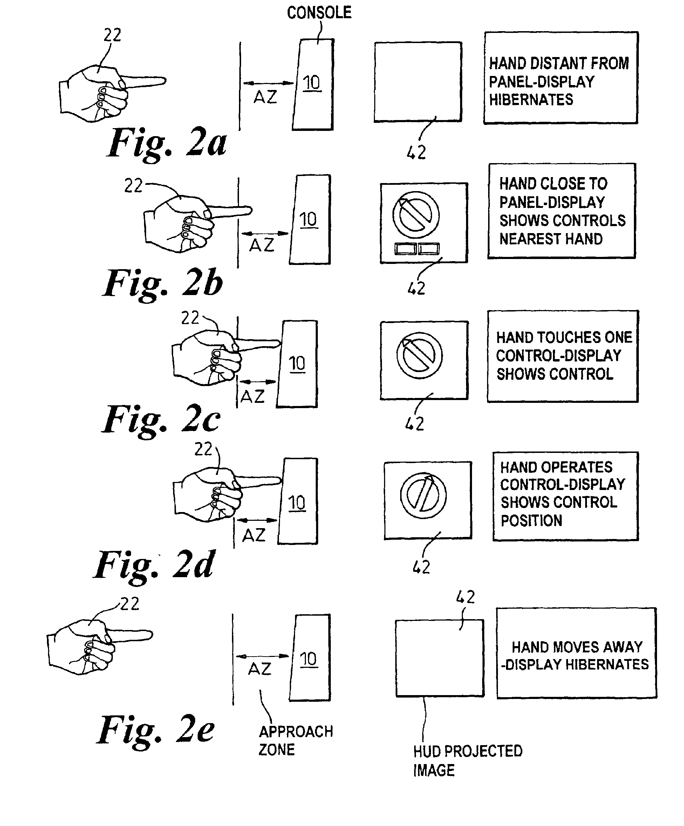

Referring now in particular to Figures 2a to 2e, the operation of the HUD 40 can be seen. While there is no object 22 within the approach zone AZ or touching the control elements 12, 14, the HUD 40 hibernates. Such a condition can be seen in Figure 2a.

When an object such as a hand 22 is brought towards the control elements 12, 14 and into the approach zone AZ, the feedback moves into an active state and brings the HUD 40 out of hibernation. The HUD 40 provides feedback to a user of his actions by projecting an image 42 which shows which of the control elements 12, 14 lie in the general area of the control panel 10 being approached by the object/hand 22.

The range between the object 22 and the control element or elements 12, 14 under substantially instantaneous approach is used to determine the nature of the feedback provided and the feedback provided differs in dependence on the range of the object 22 to the control elements 12, 14. For example, the brightness with which any particular control element 12, 14 is shown in the projected image 42 increases as the range between it 12, 14 and the object 22 decreases.

It may be found desirable in some embodiments for the feedback provided to be prioritised so that a user is better able to control certain functions predesignated as more important than others controlled by neighbouring control elements 12, 14. These may be, for example, windscreen wipers or an air bag disabling button and, by giving them a high priority ranking, the chances of a user being distracted by less important controls like radio volume are reduced.

To implement this option, each control element 12, 14 is given a ranking which defines its priority and the higher priority control elements 12, 14 are displayed in, for example, brighter or different colours to the lower priority control elements 12, 14. When using a priority ranking arrangement, between equally ranked control elements 12, 14 the priority ranking conveniently changes in real time based solely on the instantaneous proximity of the object 22 to each control element 12, 14 such that the nearest is shown as the brightest.

Furthermore, an additional indication may be applied when a control element 12, 14 is actually touched, i.e. range is zero. Such an indication may be, for example, the emission of a sound or a change in colour of a portion of the touched control element 12, 14. The additional indication may advantageously be accompanied by a partial or full fade-out of the surrounding control elements 12, 14, so as to enable the user to better focus on the task in hand.

The HUD image 42 is projected towards a window of the vehicle, such as a windscreen 44, or towards a HUD combiner. Such a situation can be seen with reference to Figure 2b. The image 42 is thereby projected substantially into a user's line of sight. It may be found convenient to project the image elsewhere, for example into a rear windscreen while reversing. The feedback is thus provided in an area which is remote from the position of the control element 12, 14 in question.

The separation of where the feedback is provided from where the control elements 12, 14 are located, allows the user to control a subsystem without having to look substantially directly towards its associated control element 12, 14. This may prove advantageous in particular if the user is driving the vehicle, as the need to take his eyes off the road is thereby reduced.

The feedback provided in Figure 2b is shown in the form of symbols which represent the configuration of the control elements 12, 14 being approached. The feedback provided in the HUD image 42 need not be limited to graphical representation and could, for example, in the alternative or in addition be provided in the form of one or more of an alphanumeric message and a moving or still picture.

When the user touches a particular control element 12, only that control element 12 is displayed, along with visual feedback of changes made to the state of at least one of the control elements concerned 12 or changes made to the state of a subsystem under the control of that control element 12. Such operation is shown in Figures 2c and 2d.

The feedback provided by this control arrangement can thus be seen to be information which relates to the control of the subsystem under the command of a particular control element 12, 14. By providing this flexibility in what form the feedback is actually provided, user convenience is increased. When controlling an air-conditioning system, for example, it may be more use to a user to know what the set temperature is rather than the rotational position of a temperature control knob 12.

When the object 22 is taken out of the maximum range of the detector arrangement 16, 18, the feedback moves out of an active state, the HUD 40 hibernates and its display 42 goes blank, as shown in Figure 2e.

It can thus be seen that a user uses the feedback to guide his hand 22 more accurately towards a desired control element 12 and is able to make appropriate adjustments without having to look directly at the control panel 10. As stated above, this is particularly useful if the user is driving the vehicle as it means that he can reach for and use control elements 12, 14 without taking his eyes off the road ahead.

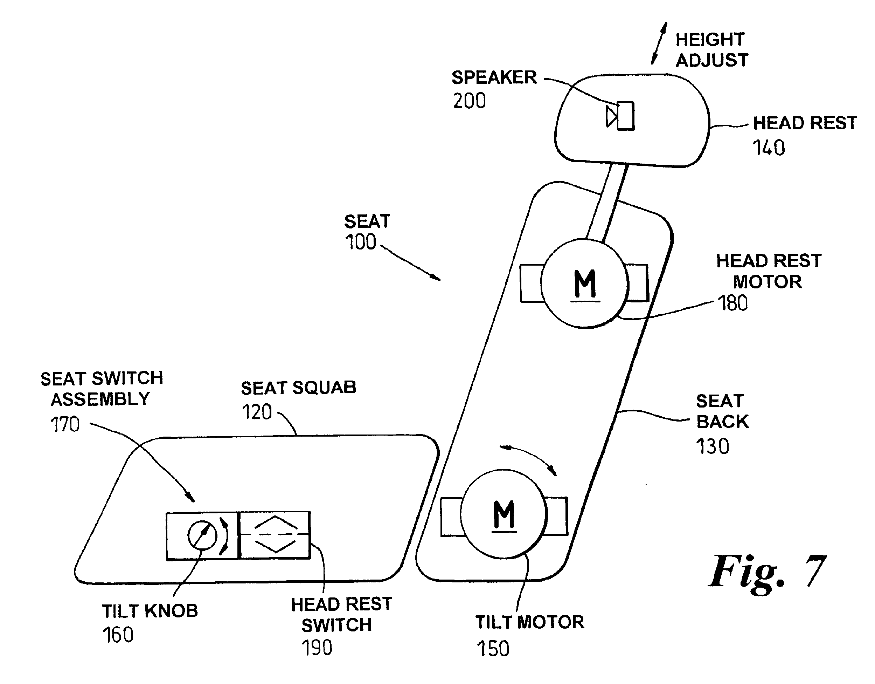

In a variation to the invention, shown with reference to Figure 7, it can be shown that the invention is not limited only to the provision of feedback which is user detectable using the sense of vision. The sense of touch can also be employed and, in the embodiment shown, is demonstrated by way of example in relation to a user seat arrangement 100 comprising a seat squab 120 and a seat back 130 which includes a headrest 140.

The seat back 130 is provided with a tilt motor 150 for tilting it 130 back and forth, the motor 150 being under the control of a tilt knob 160 forming part of a seat switch assembly 170. The head rest 140 is height adjustable by a head rest motor 180, which is under the control of a head rest switch 190 forming part of the seat switch assembly 170. The seat switch assembly 170 and its switches 160, 190 include proximity and touch sensing so as to detect the range from the switches 160, 190 of approaching or touching objects 22.

In similar fashion to the embodiments described above, when a user brings his hand 22 to within an approach zone of the switches 160, 190, the user is provided with feedback in a location remote from the switches 160, 190. In this case the feedback tells the user which of the switches 160, 190 he is approaching or touching and what the setting is of the subsystem 150, 180 under its control. The feedback is provided in an area which is remote from the switch concerned and which, by the nature of the feedback, negates the need for the user to look towards the switch assembly 170 so as to determine which switch 160, 190 he is approaching or touching.

The form of feedback provided in this embodiment is one which utilises the sense of touch. As the user's hand 22 approaches the tilt knob 160, the approach or touching is detected by the detector arrangement, which in turn causes the tilt motor to move the seat back 130 fractionally back and forth at a high frequency. In similar fashion, as a user moves his hand towards the head rest switch 190, the detection of this approach or touch causes the head rest motor 180 to move the head rest fractionally up and down at a high frequency. In each case, the portion of the seat which will be affected by use of the control element 169, 190 is vibrated and thus the feedback is provided. In this way, a user knows from the feedback which subsystem is controlled by the switch 160, 190 he is about to touch or is in fact touching, without the need to look at the switch assembly 170.

In a further variation to the invention, the feedback could be provided entirely or in part by voice or sound messages, thereby utilising the sense of hearing. Such an arrangement is easily implemented using a speaker 200, which might for example be located in the head rest 140. Again, the feedback is provided in a location remote from the actual location of the switch assembly 170 and again negates the need for a user to look substantially directly towards the switch assembly 170 in order to find out which switch 160, 190 he is going to operate.

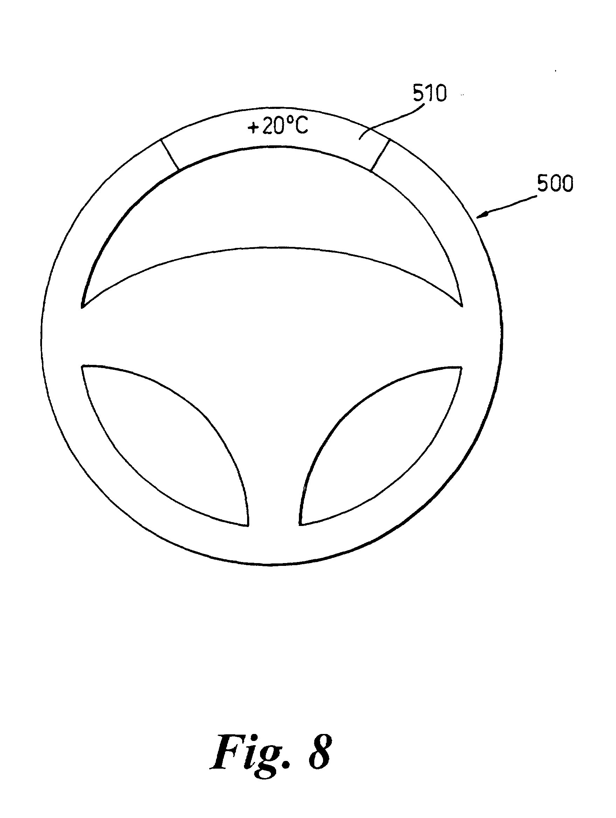

In one particular embodiment, shown with particular reference to Figure 8, the HUD arrangement 40, 42, 44 is replaced or supplemented by a steering wheel 500 which incorporates an optical display 510. The steering wheel 500 is selectable as the principal feedback element and the display 510 is adapted to provide feedback messages in which the feedback is presented to the driver of the vehicle substantially within his line of sight while the steering wheel 500 is in at least one position. In the example shown in Figure 8, the feedback provided is a read out of the set temperature (20°C) of an air conditioning system, thus telling the user that his hand 22 is approaching the air conditioning control and also what the current setting is.

## Claims

1. A control arrangement for a vehicle, comprising at least one user operated control element (12, 14) for controlling a vehicle subsystem, a detector (16, 18) which detects the range of an object (22) to a said control element and a feedback element (40) which is operatively connected to said detector, **characterised in that**, when an object (22) is within a predetermined range (AZ) of said control element (12, 14), said feedback element (40) provides to a user, in an area (44) remote from said control element, feedback (42) relating to the control of said subsystem, whereby said subsystem is user controllable without the need to look substantially directly towards said control element.

2. A control arrangement according to Claim 1, wherein said feedback (42) becomes active as a said object (22) is brought within said predetermined range (AZ) of said control element (12, 14).

3. A control arrangement according to Claim 1 or Claim 2, wherein said feedback (42) moves out of an active state when a said object (22) is moved out of said predetermined range (AZ).

4. A control arrangement according to any preceding claim, wherein said feedback (42) hibernates during a period of time when there is no object (22) within said predetermined range (AZ) of any said control element (12, 14).

5. A control arrangement according to any preceding claim, wherein said feedback element (40) provides different feedback depending on the range of a said object (22) to at least one said control element (12, 14).

6. A control arrangement according to any preceding claim, wherein said detector (16, 18) comprises a proximity detector portion (16) and a touch detector portion (18) and said feedback element (40) provides different feedback (42) depending on whether said range is an approach to or touching of a said control element (12, 14).

7. A control arrangement according to any preceding claim, wherein said control arrangement comprises a plurality of said control elements (12, 14) and, if a said object (22) is within said predetermined range (AZ) of a plurality of said control elements, said feedback element (40) provides feedback (42) in accordance with a priority ranking of said plurality of control elements.

8. A control arrangement according to Claim 7, wherein said priority ranking is based on the substantially instantaneous proximity of said object (22) to one or more of said plurality of control elements (12, 14).

9. A control arrangement according to any preceding claim, wherein said feedback (42) comprises a visual message which is displayed substantially within a portion of a user's line of sight (44).

10. A control arrangement according to any preceding claim, wherein said feedback element comprises a head-up-display (40).

11. A control arrangement according to Claim 10, wherein said feedback (42) comprises a visual message which is projected towards at least a portion of a window (44) or towards a head-up-display combiner of said vehicle.

12. A control arrangement according to any preceding claim, wherein at least a portion of said feedback (42) is user detectable using at least one of the senses of hearing and touch.

13. A control arrangement according to any preceding claim, wherein said feedback (42) provides user perceptible feedback of changes made to the state of at least one of a said control element (12, 14) and a said subsystem associated with said control element.

14. A control arrangement according to any preceding claim, wherein said feedback element comprises a steering wheel (500) including an optical display (510), said optical display being adapted to provide to a user said feedback.

15. A method of controlling a subsystem of a vehicle, the method including:
a) detecting the range of an object (22) to at least one user operated control element (12, 14);
b) providing to a user and in an area (44) remote from said control element, when an object (22) is within a predetermined range (AZ) of said control element, feedback (42) relating to the control of said subsystem, whereby said subsystem is user controllable without the need to look substantially directly towards said control element.
